# EUROPEAN PATENT APPLICATION

(11) **EP 4 799 898 A1**
(43) Date of publication of application: **02.09.2026**
(21) Application number: 23956622.7
(22) Date of filing: 28.11.2023
(51) Int. Cl.: B61D 27/00

(54) **EMERGENCY VENTILATION DUCT SYSTEM FOR SUBURBAN TRAIN, AND SUBURBAN TRAIN**

(30) Priority: 25.10.2023 CN 202311390110
(71) Applicant: CRRC Changchun Railway Vehicles Co., Ltd., Changchun, Jilin 130000 (CN)
(72) Inventor: GAO, Dengke, Changchun, Jilin 130000 (CN); LUO, Meng, Changchun, Jilin 130000 (CN); WANG, Yanfei, Changchun, Jilin 130000 (CN); CUI, Junsheng, Changchun, Jilin 130000 (CN)
(74) Representative: Vogelbruch, Keang
(86) International application number: PCT/CN2023/134601
(87) International publication number: WO 2025/086385

(57) **Abstract**

An emergency ventilation duct system for a suburban train. The duct system comprises a cab ventilation system (1), a passenger-compartment ventilation system (2) and an air-conditioning controller, wherein the cab ventilation system (1) comprises a cab air-conditioning unit (11) and a cab ventilation module (12), and the passenger-compartment ventilation system (2) comprises a passenger-compartment air-conditioning unit (21) and a passenger-compartment ventilation module (22). The duct system further comprises an emergency ventilation module (3), the emergency ventilation module (3) comprising a bypass air valve and a bypass duct, wherein the bypass duct connects the cab ventilation module (12) to the passenger-compartment ventilation module (22). When a suburban train is in a normal operation state, the air-conditioning controller controls the bypass air valve to open at a first fixed angle; and when the suburban train is in an emergency state, the air-conditioning controller controls the bypass air valve to adjust from the first fixed angle to completely closed, and then adjust from being completely closed to completely open. The emergency ventilation duct system for a suburban train can solve the existing problem of a poor comfort level caused by it not being possible to ventilate a cab or regulate the ambient temperature when a suburban train is in an emergency state. Further provided is a suburban train having the emergency ventilation duct system.

## Description

### CROSS-REFERENCE TO THE RELATED APPLICATIONS

The present invention claims priority to Chinese patent application No. 202311390110.9, filed with the China National Intellectual Property Administration on October 25, 2023, and titled "EMERGENCY VENTILATION AIR DUCT SYSTEM FOR SUBURBAN TRAIN, AND SUBURBAN TRAIN", the entirety of which is incorporated herein by reference.

### TECHNICAL FIELD

The present invention relates to the technical field of suburban trains, and in particular, to an emergency ventilation duct system for suburban train, and a suburban train.

### BACKGROUND

A suburban train is a rail transit system that connects the central urban area of a metropolitan area with surrounding town clusters and provides fast, high-capacity, and bus-style transport services for commuter passenger flows. The development of suburban trains brings multiple benefits on optimizing urban functional layout, promoting coordinated development of cities and small towns, and expanding effective investment, and is conducive to expanding public transport service supply and effectively alleviating urban traffic congestion.

Existing suburban train ventilation systems provide separate air duct systems for the driver's cab and the passenger compartment. This design takes into account that the driver is in the driver's cab, which is an independent space separated from the passenger compartment, and that temperature greatly affects the driver's working condition, such that providing a separate air duct system makes it easier for the driver to adjust the temperature inside the driver's cab according to personal needs. However, there are still disadvantages: currently, only one air-conditioning unit is usually provided in the driver's cab, leaving no redundancy in case of failure. Therefore, when the driver's cab air-conditioning unit fails, for example, fails to provide ventilation, fails to cool in summer, or fails to heat in winter, the comfort of the driver's cab is reduced, affecting the driver's working condition.

### SUMMARY

In view of this, an objective of the present invention is to provide an emergency ventilation duct system for suburban train, and a suburban train, so as to solve the problem of poor comfort caused by the inability of the driver's cab of existing suburban trains to be ventilated in an emergency situation.

In a first aspect, an embodiment of the present invention provides an emergency ventilation duct system for suburban train, including a driver's cab ventilation system, a passenger compartment ventilation system, and an air-conditioning controller, wherein the driver's cab ventilation system includes a driver's cab air-conditioning unit and a driver's cab ventilation module, and the passenger compartment ventilation system includes a passenger compartment air-conditioning unit and a passenger compartment ventilation module, where the emergency ventilation duct system for suburban train further includes an emergency ventilation module, the emergency ventilation module includes a bypass air damper and a bypass air duct, and the bypass air duct is in communication with the driver's cab ventilation module and the passenger compartment ventilation module; when the suburban train is in normal operation, the air-conditioning controller controls the bypass air damper to open to a first fixed angle; and when the suburban train is in an emergency condition, the air-conditioning controller controls the bypass air damper to adjust from the first fixed angle to fully closed, and then from fully closed to fully open.

Preferably, the driver's cab ventilation module includes a driver's cab ventilation main body and a driver's cab ventilation hose; the passenger compartment ventilation module includes a passenger compartment ventilation main body, a passenger compartment ventilation hose, and a passenger compartment air damper; and the bypass air duct includes a bypass air duct hose, one end of which is connected to the driver's cab ventilation main body, and the other end of which is connected to the passenger compartment ventilation main body.

Preferably, the driver's cab ventilation main body includes a driver's cab air supply cavity and a driver's cab return air cavity, and the bypass air duct hose is in communication with the driver's cab return air cavity.

According to the above technical features, by connecting the bypass air duct hose to the driver's cab return air cavity, it is avoided that, when the suburban train is in normal operation, the driver's cab ventilation main body supplies air to the passenger compartment main body through the bypass air duct hose, thereby reducing the cooling or heating efficiency of the driver's cab main body.

Preferably, the emergency conditions at least include the following two types:
a first emergency condition: a fault occurs in the driver's cab air-conditioning unit; and
a second emergency condition: the entire suburban train suffers an emergency power outage.

Preferably, when the suburban train is in the first emergency condition, the passenger compartment ventilation system operates normally, and the passenger compartment air-conditioning unit provides ventilation, cooling, or heating to the driver's cab main body through the emergency ventilation module; and when the suburban train is in the second emergency condition, power is supplied by a storage battery of the train, and fresh air is supplemented into the driver's cab main body through the emergency ventilation module, thereby ensuring fresh air supply within the suburban train.

Preferably, the first fixed angle ranges from 50 degrees to 70 degrees.

According to the above technical features, the first fixed angle is preferably 60 degrees. When the first fixed angle is 60 degrees, the air volume of the suburban train is moderate, and the generated noise does not exceed 60 dB(A), which is the noise level under normal cooling operation of the driver's cab air-conditioning unit.

Preferably, the bypass air duct hose at least includes a first bypass air duct hose and a second bypass air duct hose; the bypass air damper at least includes a first bypass air damper and a second bypass air damper; both the first bypass air damper and the second bypass air damper are arranged in the passenger compartment ventilation main body; and the first bypass air damper and the second bypass air damper are capable of being controlled uniformly or independently.

According to the above technical features, by providing two sets of bypass air duct hoses and bypass air dampers for the emergency ventilation module, on the one hand, failure of one bypass air damper affecting emergency ventilation is avoided, and on the other hand, the ventilation volume in the bypass air duct hoses is increased.

Preferably, a plurality of air-conditioning controllers are provided, and are respectively arranged in different carriages of the suburban train; and the first bypass air damper and the second bypass air damper are capable of being controlled uniformly by the same air-conditioning controller, or separately controlled by different air-conditioning controllers.

According to a second aspect of the present invention, a suburban train is provided, where the suburban train includes a driver's cab main body, a passenger compartment main body, and the emergency ventilation duct system for suburban train as described above.

Beneficial effects achievable by the present invention include: on the one hand, when the suburban train is in normal operation, the air-conditioning controller controls the bypass air damper to open to a first fixed angle, so that while the driver's cab ventilation system uses the driver's cab air-conditioning unit to adjust the ambient temperature of the driver's cab and the passenger compartment ventilation system uses the passenger compartment air-conditioning unit to adjust the ambient temperature of the passenger compartment, the driver's cab ventilation system is also in communication with the passenger compartment ventilation system through the emergency ventilation module, such that redundant cooling or heating capacity in the passenger compartment main body flows to the driver's cab main body, thereby reducing the workload of the driver's cab air-conditioning unit and saving costs, and at the same time, supplementing cooling/heating capacity in the driver's cab main body under extreme external temperature conditions; further, by setting the first fixed angle to 60 degrees, the suburban train obtains a moderate air volume without generating additional noise.

On the other hand, when the suburban train is in an emergency condition, the air-conditioning controller controls the bypass air damper to adjust from the first fixed angle to fully closed, and then from fully closed to fully open, so that when the driver's cab air-conditioning unit fails, the cooling and heating capacity of the passenger compartment air-conditioning unit is used to adjust the air temperature inside the driver's cab main body, thereby improving driver comfort; in the event of a whole-train emergency power outage, fresh air generated by the passenger compartment air-conditioning unit is delivered into the driver's cab main body through the emergency ventilation module, supplementing a certain amount of fresh air for the driver's cab main body; further, by using on-off feedback type air dampers as the bypass air dampers, the present invention reduces the cost of the train emergency ventilation duct system and also reduces control difficulty; furthermore, in the process of adjusting the on-off feedback type bypass air damper from the first fixed angle to fully open, the step of adjusting it to fully closed is added, thereby achieving secondary calibration of the bypass air damper, improving the control accuracy of the air-conditioning controller over the bypass air damper, and thus providing effective guarantee for cooling, heating, and fresh air supply in the driver's cab main body under emergency conditions.

To make the above objectives, features, and advantages of the present invention more obvious and easier to understand, preferred embodiments are described in detail below with reference to the accompanying drawings.

### BRIEF DESCRIPTION OF THE DRAWINGS

To explain the technical solutions of the embodiments of the present invention more clearly, the drawings required for the embodiments will be briefly introduced below. It should be understood that the following drawings show only some embodiments of the present invention and therefore should not be considered as limiting the scope. For those of ordinary skill in the art, other related drawings can be obtained from these drawings without creative effort.
FIG. 1 shows a schematic overall installation diagram of the emergency ventilation duct system for suburban train and the suburban train according to the present invention;
FIG. 2 shows a schematic structural diagram of the emergency ventilation duct system for suburban train according to the present invention; and
FIG. 3 shows a schematic structural diagram of a driver's cab ventilation main body according to the present invention.

Reference numerals: 1 - driver's cab ventilation system; 11 - driver's cab air-conditioning unit; 12 - driver's cab ventilation module; 121 - driver's cab ventilation main body; 1211 - driver's cab air supply cavity; 1212 - driver's cab return air cavity; 1213 - first bypass port; 1214 - second bypass port; 122 - driver's cab ventilation hose; 2 - passenger compartment ventilation system; 21 - passenger compartment air-conditioning unit; 22 - passenger compartment ventilation module; 221 - passenger compartment ventilation main body; 222 - passenger compartment ventilation hose; 3 - emergency ventilation module; 31 - first bypass air duct hose; 32 - second bypass air duct hose; 33 - first bypass air damper; 34 - second bypass air damper; 4 - driver's cab main body; 5 - passenger compartment main body.

### DETAILED DESCRIPTION OF THE EMBODIMENTS

The following detailed description is provided to help readers gain a comprehensive understanding of the methods, devices, and/or systems described herein. However, various variations, modifications, and equivalents of the methods, devices, and/or systems described herein will become apparent after understanding the present invention. For example, the order of operations described herein is merely an example, and is not limited to the order set forth herein; rather, variations that will be apparent after understanding the present invention may be made, except for operations that must occur in a specific order. In addition, to improve clarity and conciseness, descriptions of features known in the art may be omitted.

The features described herein may be embodied in different forms and should not be construed as being limited to the examples described herein. Rather, the examples described herein have been provided only to illustrate some of the many possible ways to implement the methods, devices, and/or systems described herein that will be apparent after understanding the present invention.

Throughout this specification, when an element (such as a layer, region, or substrate) is described as being "on," "connected to," "coupled to," "over," or "covering" another element, it may be directly "on," "connected to," "coupled to," "over," or "covering" the other element, or there may be one or more intervening elements. In contrast, when an element is described as being "directly on," "directly connected to," "directly coupled to," "directly over," or "directly covering" another element, there may be no intervening elements.

As used herein, the term "and/or" includes any one of the listed related items and any combination of any two or more thereof.

Although terms such as "first," "second," and "third" may be used herein to describe various components, elements, regions, layers, or portions, these components, elements, regions, layers, or portions are not limited by these terms. Rather, these terms are merely used to distinguish one component, element, region, layer, or portion from another component, element, region, layer, or portion. Thus, a first component, element, region, layer, or portion referred to in the examples described herein may also be referred to as a second component, element, region, layer, or portion without departing from the teachings of the examples.

For ease of description, spatially relative terms such as "above," "upper," "below," and "lower" may be used herein to describe the relationship of one element to another as shown in the drawings. Such spatially relative terms are intended to encompass different orientations of the device in use or operation in addition to the orientation depicted in the drawings. For example, if the device in the drawings is turned over, an element described as being "above" or "over" another element would then be "below" or "under" the other element. Thus, the term "above" includes both orientations of "above" and "below" depending on the spatial orientation of the device. The device may be otherwise oriented (e.g., rotated 90 degrees or in other orientations), and the spatially relative terms used herein shall be interpreted accordingly.

The terminology used herein is only for the purpose of describing various examples and is not intended to limit the examples. The singular form is intended to include the plural form unless the context clearly indicates otherwise. The terms "including," "including," and "having" enumerate the stated features, quantities, operations, components, elements, and/or combinations thereof, but do not exclude the presence or addition of one or more other features, quantities, operations, components, elements, and/or combinations thereof.

Variations in the shapes shown in the drawings may occur due to manufacturing techniques and/or tolerances. Therefore, the examples described herein are not limited to the specific shapes shown in the drawings, but include variations in shapes that occur during manufacturing.

In the following, technical solutions in the embodiments of the present invention will be clearly and completely described with reference to the accompanying drawings in the embodiments of the present invention. Apparently, the described embodiments are part of the embodiments of the present invention, not all of the embodiments. Based on the embodiments in the present invention, all other embodiments obtained by a person of ordinary skill in the art without creative effort shall fall within the protection scope of the present invention.

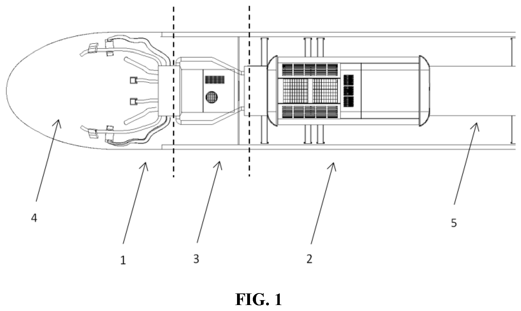

As shown in FIG. 1, according to a first aspect of the present invention, there is provided an emergency ventilation duct system for suburban train, the system including a driver's cab ventilation system 1, a passenger compartment ventilation system 2, an emergency ventilation module 3, and an air-conditioning controller (not shown). The suburban train includes a driver's cab main body 4 and a passenger compartment main body 5.

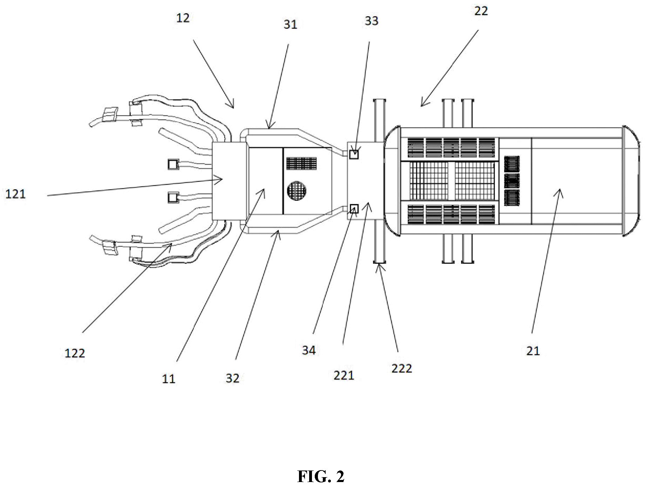

In the following description, the specific structures of the above-mentioned components of the emergency ventilation duct system for suburban train and the connection relationships therebetween will be described in detail with reference to FIGS. 1 and 2.

As shown in FIG. 2, the driver's cab ventilation system 1 includes a driver's cab air-conditioning unit 11 and a driver's cab ventilation module 12, the passenger compartment ventilation system 2 includes a passenger compartment air-conditioning unit 21 and a passenger compartment ventilation module 22, and the emergency ventilation module 3 includes a bypass air damper (valve) and a bypass air duct, the bypass air duct communicating the driver's cab ventilation module 12 with the passenger compartment ventilation module 22.

In an embodiment, the driver's cab air-conditioning unit 11 and the driver's cab ventilation module 12 are both located at the top of the driver's cab main body 4, the passenger compartment air-conditioning unit 21 and the passenger compartment ventilation module 22 are both located at the top of the passenger compartment main body 5, and the bypass air duct communicates between the driver's cab ventilation module 12 and the passenger compartment ventilation module 22. In addition, an air-conditioning control cabinet (not shown) is provided in the suburban train, and an air-conditioning controller is installed in the air-conditioning control cabinet, so as to implement automatic control of the emergency ventilation duct system for the suburban train through the air-conditioning controller. Specifically, when the suburban train is in normal operation, the air-conditioning controller controls the bypass air damper to open to a first fixed angle; when the suburban train is in an emergency condition, the air-conditioning controller controls the bypass air damper to adjust from the first fixed angle to fully closed, and then adjust from fully closed to fully open.

By adding the emergency ventilation module 3 on the basis of the existing driver's cab and passenger compartment air duct systems, the driver's cab ventilation system 1 is in communication with the passenger compartment ventilation system 2, enabling air supply from the passenger compartment ventilation system 2 to the driver's cab ventilation system 1. In the prior art, the driver's cab ventilation system 1 independently adjusts the ambient temperature of the driver's cab using the driver's cab air-conditioning unit 11, and the passenger compartment ventilation system 2 independently adjusts the ambient temperature of the passenger compartment using the passenger compartment air-conditioning unit 21. The passenger compartment main body 5 of a suburban train includes a leading passenger compartment (close to the driver's cab main body 4) and an intermediate passenger compartment (away from the driver's cab main body 4). Typically, the carriage length of the leading passenger compartment is shorter than that of the intermediate passenger compartment, and it carries fewer passengers; however, the passenger compartment air-conditioning unit 21 provides the same cooling or heating capacity to both the leading and intermediate passenger compartments, resulting in a relatively large surplus cooling or heating capacity in the leading passenger compartment. In the embodiment of the present invention, when the suburban train is in normal operation, the driver's cab ventilation system 1 and the passenger compartment ventilation system 2 are communicated through the emergency ventilation module 3, so that the surplus cooling or heating capacity of the leading passenger compartment flows to the driver's cab main body 4, thereby reducing the workload of the driver's cab air-conditioning unit 11 and saving costs, and at the same time, supplementing cooling/heating capacity in the driver's cab main body 4 under extreme external temperature conditions.

Preferably, the driver's cab ventilation module 12 includes a driver's cab ventilation main body 121 and a driver's cab ventilation hose 122; the passenger compartment ventilation module 22 includes a passenger compartment ventilation main body 221, a passenger compartment ventilation hose 222, and a passenger compartment air damper (not shown); and the bypass air duct includes a bypass air duct hose, one end of which is connected to the driver's cab ventilation main body 121, and the other end of which is connected to the passenger compartment ventilation main body 221. Specifically, the driver's cab ventilation main body 121 may be arranged at the top of the driver's cab main body 4 to avoid occupying internal space of the driver's cab main body 4 and improve driver comfort. The driver's cab ventilation main body 121 communicates with the driver's cab air-conditioning unit 11, and one end of the driver's cab ventilation hose 122 communicates with the driver's cab ventilation main body 121 while the other end communicates with the interior of the driver's cab main body 4, so that the driver's cab air-conditioning unit 11 provides cooling or heating for the driver's cab main body 4 to adjust the ambient temperature inside the driver's cab main body 4. The passenger compartment ventilation main body 221 may be arranged at the top of the passenger compartment main body 5. The passenger compartment ventilation main body 221 communicates with the passenger compartment air-conditioning unit 21, and one end of the passenger compartment ventilation hose 222 communicates with the passenger compartment ventilation main body 221 while the other end communicates with the interior of the passenger compartment main body 5, so that the passenger compartment air-conditioning unit 21 provides cooling, heating, or fresh air for the passenger compartment main body 5 to adjust the air quality and ambient temperature inside the passenger compartment main body 5.

Preferably, as shown in FIG. 2, the bypass air duct hose at least includes a first bypass air duct hose 31 and a second bypass air duct hose 32, and the bypass air damper at least includes a first bypass air damper 33 and a second bypass air damper 34. The first bypass air duct hose 31 and the second bypass air duct hose 32 are respectively located on the left and right sides of the driver's cab air-conditioning unit 11. The first bypass air duct hose 31 connects the right side of the driver's cab ventilation main body 121 with the right side of the passenger compartment ventilation main body 221, and the second bypass air duct hose 32 connects the left side of the driver's cab ventilation main body 121 with the left side of the passenger compartment ventilation main body 221. The first bypass air damper 33 and the second bypass air damper 34 may be arranged in the driver's cab ventilation main body 121 or in the passenger compartment ventilation main body 221, preferably in the passenger compartment ventilation main body 221. The first bypass air damper 33 is configured to control ventilation in the first bypass air duct hose 31, and the second bypass air damper 34 is configured to control ventilation in the second bypass air duct hose 32. By providing two sets of bypass air duct hoses and bypass air dampers for the emergency ventilation module 3, on the one hand, failure of one bypass air damper affecting emergency ventilation is avoided, and on the other hand, the ventilation volume in the bypass air duct hoses is increased.

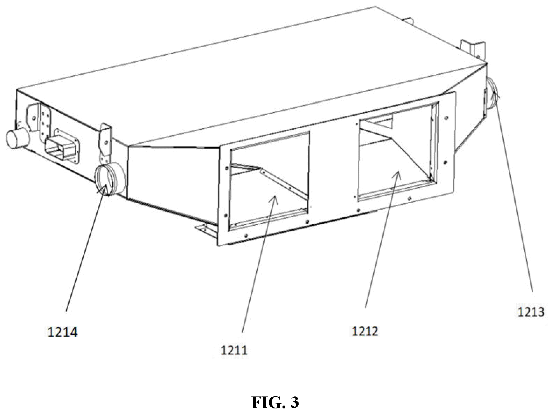

Preferably, as shown in FIG. 3, the driver's cab ventilation main body 121 includes a driver's cab air supply cavity 1211, a driver's cab return air cavity 1212, a first bypass port 1213, and a second bypass port 1214. The first bypass air duct hose 31 is connected to the first bypass port 1213 and communicates with the driver's cab return air cavity 1212, and the second bypass air duct hose 32 is connected to the second bypass port 1214 and also communicates with the driver's cab return air cavity 1212. By connecting the bypass air duct hose to the driver's cab return air cavity 1212, it is avoided that, when the suburban train is in normal operation, the driver's cab ventilation main body 121 supplies air to the passenger compartment main body 5 through the bypass air duct hose, thereby reducing the cooling or heating efficiency of the driver's cab main body 4.

Preferably, a plurality of air-conditioning controllers are provided, and are respectively arranged in different carriages of the suburban train. The first bypass air damper 33 and the second bypass air damper 34 may be commonly controlled by the same air-conditioning controller, or separately controlled by different air-conditioning controllers.

The first bypass air damper 33 and the second bypass air damper 34 are both on-off feedback type air dampers. In the prior art, ventilation air dampers for suburban trains include on-off feedback type air dampers and analog feedback type air dampers, wherein the analog feedback type air damper can detect the blade angle in real time to perform stepless adjustment of the damper opening angle, but it requires high control accuracy and has a higher cost. The present invention reduces the cost of the emergency ventilation duct system for suburban train and also reduces control difficulty by using on-off feedback type air dampers.

In the following description, the control process of the bypass air damper in the emergency ventilation duct system for suburban train will be described in detail.

In an initial state, the air-conditioning controller controls the bypass air damper to open to a first fixed angle. At this time, on the one hand, the driver's cab air-conditioning unit 11 provides cooling or heating for the driver's cab main body 4, and the passenger compartment air-conditioning unit 21 provides cooling or heating for the passenger compartment main body 5; on the other hand, ventilation in the bypass air duct hose is implemented through the opened bypass air damper, so that part of the cooling or heating from the passenger compartment air-conditioning unit 21 flows into the driver's cab main body 4.

During operation of the suburban train, when the first emergency condition occurs, i.e., the driver's cab air-conditioning unit 11 fails, the fault switch contact acts and feeds back a fault signal to the air-conditioning controller. At this time, the air-conditioning controller controls the bypass air damper to adjust from the first fixed angle to fully closed, and then from fully closed to fully open.

Specifically, during operation of the suburban train, common faults of the driver's cab air-conditioning unit 11 include fan faults and refrigeration faults. Fan faults are usually caused by the following reasons: fan contactor not engaging, fan contactor sticking, fan circuit breaker not engaging, and fan circuit breaker sticking. When a fan fault occurs due to any of the above reasons, the corresponding contacts of the relevant contactor or circuit breaker will, after action, feed back a signal to the air-conditioning controller. Refrigeration faults are usually caused by the following reasons: compressor contactor not engaging, compressor contactor sticking, compressor circuit breaker not engaging, compressor circuit breaker sticking, condenser fan contactor not engaging, condenser fan contactor sticking, condenser fan circuit breaker not engaging, condenser fan circuit breaker sticking, highpressure switch no feedback, low-pressure switch no feedback, and condenser fan overheat protection switch no feedback. When a refrigeration fault occurs due to any of the above reasons, the corresponding contacts of the relevant contactors and circuit breakers will, after action, feed back a signal to the air-conditioning controller. Upon receiving the fault signal feedback, the air-conditioning controller sends an action signal to the bypass air damper.

When the driver's cab air-conditioning unit 11 fails, the passenger compartment ventilation system 2 operates normally. At the same time, because the bypass air damper is fully open, the cooling and heating gases generated by the passenger compartment air-conditioning unit 21 can enter the driver's cab main body 4 through the bypass air duct hose, thereby playing a certain role in regulating the environment inside the driver's cab main body 4.

During operation of the suburban train, when the second emergency condition occurs, i.e., an emergency power outage of the whole suburban train, the train enters an emergency ventilation state. At this time, emergency power is supplied by a storage battery suspended in an equipment compartment under the train. The storage battery supplies power to the driver's cab ventilation system 1, the passenger compartment ventilation system 2, and the air-conditioning controller. After receiving the train emergency power outage signal, the air-conditioning controller controls the bypass air damper to adjust from the first fixed angle to fully closed, and then from fully closed to fully open.

Specifically, during operation of the suburban train, an emergency power outage of the whole train is usually caused by cable fire, pantograph failure, main transformer failure, or the like. When the whole train is powered off, the storage battery provides emergency power supply, and at the same time, the air-conditioning controller limits the cooling and heating functions of the driver's cab air-conditioning unit 11 and the passenger compartment air-conditioning unit 21, ensuring only the fresh air supply function to guarantee basic oxygen supply for the driver and passengers. At this time, because the bypass air damper is fully open, on the basis of the driver's cab air-conditioning unit 11 providing partial fresh air for the driver's cab main body 4, the passenger compartment air-conditioning unit 21 can further supplement fresh air into the driver's cab main body 4 through the bypass air duct hose.

In the present invention, the bypass air damper is an on-off feedback type air damper, and the opening and closing angle of its blades is controlled by an air damper actuator. Specifically, a single opening/closing cycle of an on-off feedback type air damper has a certain duration. The air-conditioning controller sends a control signal to control the air damper actuator to operate for a certain period of time, so that the blades of the on-off feedback type air damper open to a corresponding angle. For an on-off feedback type air damper, the fully closed position of the blades serves as a reference position. The air-conditioning controller controls the bypass air damper to adjust from the first fixed angle to fully closed, and then from fully closed to fully open, so that during the process of adjusting from the first fixed angle to fully open, the step of adjusting to fully closed is added, thereby achieving calibration of the bypass air damper during the control process. Thus, initial calibration at the initial stage and secondary calibration during intermediate closure are implemented, improving the control accuracy of the air-conditioning controller over the bypass air damper, and thereby providing effective guarantee for cooling, heating, and fresh air supply in the driver's cab main body 4 under emergency conditions.

Preferably, the passenger compartment air damper includes a passenger compartment return air damper, a passenger compartment fresh air damper, and a passenger compartment exhaust air damper. When the suburban train is in the second emergency condition, the passenger compartment return air damper is fully closed, and the passenger compartment fresh air damper and the passenger compartment exhaust air damper are fully opened. In the case of a whole-train emergency power outage, fully opening the passenger compartment fresh air damper and the passenger compartment exhaust air damper ensures fresh air supply and exhaust air discharge in the passenger compartment main body 5; fully closing the passenger compartment return air damper ensures that the passenger compartment air-conditioning unit 21 provides the maximum amount of fresh air for the suburban train.

Preferably, the first fixed angle ranges from 50 degrees to 70 degrees, preferably 60 degrees. Through on-site ventilation tests on the suburban train, the data relationship between the opening angle of the bypass air damper, the ventilation volume in the train, and the noise inside the train under normal operation conditions was obtained, as shown in the following table:

| Damper angle (°) | Air volume (m³/h) | Noise dB(A) |
|---|---|---|
| 30 | 55×2 | 56 |
| 40 | 85×2 | 56.5 |
| 50 | 135×2 | 57.9 |
| 60 | 150×2 | 58.5 |
| 70 | 170×2 | 59 |
| 80 | 210×2 | 60.8 |
| 90 | 240×2 | 62 |

It can be seen from the above table that when the first fixed angle is 60 degrees, the air volume of the suburban train is moderate, and the generated noise does not exceed 60 dB(A), which is the noise level under normal cooling operation of the driver's cab air-conditioning unit 11.

In the above embodiments, the bypass air dampers are automatically controlled by the air-conditioning controller; alternatively, manual control may also be used.

In addition, as shown in FIG. 1, according to a second aspect of the present invention, there is provided a suburban train, the train including a driver's cab main body 4, a passenger compartment main body 5, and the emergency ventilation duct system for suburban train as described above.

In the suburban train of the present invention, on the one hand, when the train is in normal operation, the air-conditioning controller controls the bypass air damper to open to a first fixed angle, so that while the driver's cab ventilation system 1 uses the driver's cab air-conditioning unit 11 to adjust the ambient temperature of the driver's cab and the passenger compartment ventilation system 2 uses the passenger compartment air-conditioning unit 21 to adjust the ambient temperature of the passenger compartment, the driver's cab ventilation system 1 is also in communication with the passenger compartment ventilation system 2 through the emergency ventilation module 3, such that the surplus cooling or heating capacity in the passenger compartment main body 5 flows to the driver's cab main body 4, thereby reducing the workload of the driver's cab air-conditioning unit 11 and saving costs; further, by setting the first fixed angle to 60 degrees, the suburban train obtains a moderate air volume without generating additional noise.

On the other hand, when the suburban train is in an emergency condition, the air-conditioning controller controls the bypass air damper to adjust from the first fixed angle to fully closed, and then from fully closed to fully open, so that when the driver's cab air-conditioning unit 11 fails, the cooling and heating capacity of the passenger compartment air-conditioning unit 21 is used to adjust the air temperature inside the driver's cab main body 4, thereby improving driver comfort; in the event of a whole-train emergency power outage, fresh air generated by the passenger compartment air-conditioning unit 21 is delivered into the driver's cab main body 4 through the emergency ventilation module 3, supplementing a certain amount of fresh air for the driver's cab main body 4; further, by using on-off feedback type air dampers as the bypass air dampers, the present invention reduces the cost of the train emergency ventilation duct system and also reduces control difficulty; furthermore, in the process of adjusting the on-off feedback type bypass air damper from the first fixed angle to fully open, the step of adjusting it to fully closed is added, thereby achieving secondary calibration of the bypass air damper, improving the control accuracy of the air-conditioning controller over the bypass air damper, and thus providing effective guarantee for cooling, heating, and fresh air supply in the driver's cab main body 4 under emergency conditions.

### INDUSTRIAL APPLICABILITY

In the suburban train of the present invention, on the one hand, when the train is in normal operation, the air-conditioning controller controls the bypass air damper to open to a first fixed angle, so that while the driver's cab ventilation system uses the driver's cab air-conditioning unit to adjust the ambient temperature of the driver's cab and the passenger compartment ventilation system uses the passenger compartment air-conditioning unit to adjust the ambient temperature of the passenger compartment, the driver's cab ventilation system is also in communication with the passenger compartment ventilation system through the emergency ventilation module, such that redundant cooling or heating capacity in the passenger compartment main body flows to the driver's cab main body, thereby reducing the workload of the driver's cab air-conditioning unit and saving costs, and at the same time, supplementing cooling/heating capacity in the driver's cab main body under extreme external temperature conditions. On the other hand, when the suburban train is in an emergency condition, the air-conditioning controller controls the bypass air damper to adjust from the first fixed angle to fully closed, and then from fully closed to fully open, so that when the driver's cab air-conditioning unit fails, the cooling and heating capacity of the passenger compartment air-conditioning unit is used to adjust the air temperature inside the driver's cab main body, improving driver comfort; in the event of a whole-train emergency power outage, fresh air generated by the passenger compartment air-conditioning unit is delivered into the driver's cab main body through the emergency ventilation module, supplementing a certain amount of fresh air for the driver's cab main body.

Finally, it should be noted that the above-described embodiments are merely specific implementations of the present invention, used to illustrate the technical solutions of the present invention but not to limit the same. The protection scope of the present invention is not limited thereto. Although the present invention has been described in detail with reference to the foregoing embodiments, those of ordinary skill in the art should understand that any person skilled in the art may still modify the technical solutions described in the foregoing embodiments or readily conceive of variations, or make equivalent substitutions for some of the technical features thereof, within the technical scope disclosed in the present invention. Such modifications, variations, or substitutions do not cause the essence of the corresponding technical solutions to depart from the spirit and scope of the technical solutions of the embodiments of the present invention, and shall all fall within the protection scope of the present invention. Therefore, the protection scope of the present invention shall be subject to the protection scope of the claims.

## Claims

1. An emergency ventilation duct system for suburban train, comprising a driver's cab ventilation system, a passenger compartment ventilation system, and an air-conditioning controller, **characterized in that** the driver's cab ventilation system comprises a driver's cab air-conditioning unit and a driver's cab ventilation module, and the passenger compartment ventilation system comprises a passenger compartment air-conditioning unit and a passenger compartment ventilation module, wherein the emergency ventilation duct system for suburban train further comprises an emergency ventilation module, the emergency ventilation module comprises a bypass air damper and a bypass air duct, and the bypass air duct is in communication with the driver's cab ventilation module and the passenger compartment ventilation module; when the suburban train is in normal operation, the air-conditioning controller controls the bypass air damper to open to a first fixed angle; and when the suburban train is in an emergency condition, the air-conditioning controller controls the bypass air damper to adjust from the first fixed angle to fully closed, and then from fully closed to fully open.

2. The emergency ventilation duct system for suburban train according to claim 1, wherein the driver's cab ventilation module comprises a driver's cab ventilation main body and a driver's cab ventilation hose; the passenger compartment ventilation module comprises a passenger compartment ventilation main body, a passenger compartment ventilation hose, and a passenger compartment air damper; and the bypass air duct comprises a bypass air duct hose, wherein one end of the bypass air duct hose is connected to the driver's cab ventilation main body, and the other end of the bypass air duct hose is connected to the passenger compartment ventilation main body.

3. The emergency ventilation duct system for suburban train according to claim 2, wherein the driver's cab ventilation main body comprises a driver's cab air supply cavity and a driver's cab return air cavity, and the bypass air duct hose is in communication with the return air cavity of the driver's cab.

4. The emergency ventilation duct system for suburban train according to claim 3, wherein the emergency conditions at least comprise the following two types:
a first emergency condition: a fault occurs in the driver's cab air-conditioning unit; and
a second emergency condition: the entire suburban train suffers an emergency power outage.

5. The emergency ventilation duct system for suburban train according to claim 4, wherein when the suburban train is in the first emergency condition, the passenger compartment ventilation system operates normally, and the passenger compartment air-conditioning unit provides ventilation, cooling, or heating to the driver's cab main body through the emergency ventilation module; and when the suburban train is in the second emergency condition, power is supplied by a storage battery of the suburban train, and fresh air is supplemented into the driver's cab main body through the emergency ventilation module, thereby ensuring fresh air supply within the suburban train.

6. The emergency ventilation duct system for suburban train according to claim 4, wherein the passenger compartment air damper comprises a passenger compartment return air damper, a passenger compartment fresh air damper, and a passenger compartment exhaust air damper; and when the suburban train is in the second emergency condition, the passenger compartment return air damper is fully closed, and the passenger compartment fresh air damper and the passenger compartment exhaust air damper are fully opened.

7. The emergency ventilation duct system for suburban train according to claim 2, wherein the first fixed angle ranges from 50 degrees to 70 degrees.

8. The emergency ventilation duct system for suburban train according to claim 7, wherein the bypass air duct hose at least comprises a first bypass air duct hose and a second bypass air duct hose; the bypass air damper at least comprises a first bypass air damper and a second bypass air damper; both the first bypass air damper and the second bypass air damper are arranged in the passenger compartment ventilation main body; and the first bypass air damper and the second bypass air damper are capable of being controlled uniformly or independently.

9. The emergency ventilation duct system for suburban train according to claim 8, wherein a plurality of air-conditioning controllers are provided, and are respectively arranged in different carriages of the suburban train; and the first bypass air damper and the second bypass air damper are capable of being controlled uniformly by the same air-conditioning controller, or separately controlled by different air-conditioning controllers.

10. A suburban train, **characterized in that** the suburban train comprises a driver's cab main body, a passenger compartment main body, and the emergency ventilation duct system for suburban train according to any one of claims 1 to 9.
